# EUROPÄISCHE PATENTSCHRIFT

(11) **EP 1 850 674 B1**
(45) Veröffentlichungstag und Bekanntmachung des Hinweises auf die Patenterteilung: **18.03.2009**
(21) Anmeldenummer: 06722995.5
(22) Anmeldetag: 26.01.2006
(51) Int. Cl.: A22C 25/00

(54) **VORRICHTUNG UND VERFAHREN ZUR ERKENNUNG DER AUSRICHTUNG/LAGE VON PRODUKTEN, INSBESONDERE VON FISCHEN, AUF EINEM TRANSPORTELEMENT**
DEVICE AND METHOD FOR IDENTIFYING THE ORIENTATION/POSITION OF PRODUCTS, IN PARTICULAR FISH ON A TRANSPORT ELEMENT
DISPOSITIF ET PROCEDE POUR DETECTER L'ORIENTATION / LA POSITION DE PRODUITS, EN PARTICULIER DE POISSONS, SUR UN ELEMENT DE TRANSPORT

(30) Priorität: 11.02.2005 DE 102005007150
(43) Veröffentlichungstag der Anmeldung: 07.11.2007
(73) Patentinhaber: Nordischer Maschinenbau Rud. Baader GmbH + Co. KG, 23560 Lübeck (DE)
(72) Erfinder: BURMEISTER, Arne, 21509 Glinde (DE); RIEKER, Alexander, 23818 Neuengörs (DE)
(74) Vertreter: Wenzel & Kalkoff
(86) Internationale Anmeldenummer: PCT/EP2006/000855
(87) Internationale Veröffentlichungsnummer: WO 2006/084612

(56) Entgegenhaltungen:
- US-A- 4 051 952
- US-A- 4 727 248
- US-A- 5 013 906
- US-A- 5 115 903
- US-A- 5 591 076
- US-B1- 6 370 223

## Beschreibung

Die Erfindung betrifft eine Vorrichtung zur Erkennung der Ausrichtung/Lage von Produkten, insbesondere von Fischen, auf einem Transportelement, umfassend ein Transportelement zum Transportieren der Produkte von einem Eingabebereich zu einem Ausgabebereich sowie ein im Bereich des Transportelementes angeordnetes Messmittel. Des weiteren betrifft die Erfindung ein Verfahren zur Erkennung der Ausrichtung/Lage von Produkten, insbesondere von Fischen, auf einem Transportelement, umfassend die Schritte: Transportieren der Produkte auf einem Transportelement von einem Eingabebereich zu einem Ausgabebereich, Ermitteln der Ausrichtung/Lage der Produkte durch ein Messmittel während des Transports der Produkte auf dem Transportelement.

Derartige Vorrichtungen und Verfahren, wie z.B. aus US-A-5 591 076 bekannt, kommen immer dann zum Einsatz, wenn die Ausrichtung bzw. die Lage der Produkte für die nachfolgende Bearbeitung/Verarbeitung von Bedeutung ist. In der Fisch verarbeitendenden Industrie ist z.B. die Lage eines Fisches, also der Transport der Fische Kopf oder Schwanz voraus und/oder die Bauch- und Rückenlage bzw. -ausrichtung, für die nachfolgende Verarbeitung von besonderer Bedeutung.

Die bekannten Vorrichtungen und Verfahren nutzen u.a. Bilddaten, anhand deren Auswertung die Ausrichtung/Lage der Produkte bzw. Fische ermittelt wird. Dies ist jedoch zum einen konstruktiv sehr aufwendig, da leistungsstarke Kameras mit entsprechender Ausstattung erforderlich sind. Zum anderen ist die Leistungsfähigkeit einer solchen Vorrichtung begrenzt, da die Transportgeschwindigkeit im Zeitpunkt der Bilddatenerfassung gering sein muss. Andere bekannte Vorrichtungen und Verfahren ermitteln die Bauch-/Rückenlage nur, wenn die Produkte/Fische quer zu ihrer Längserstreckung gemessen werden. Solche Messverfahren sind nicht nur sehr teuer sondern auch nicht auf eine Messung in Längsrichtung der Produkte/Fische übertragbar.

Es ist daher Aufgabe der vorliegenden Erfindung, eine einfache und kompakte Vorrichtung zur sicheren Erkennung der Ausrichtung/Lage von Produkten zu schaffen. Des weiteren ist es Aufgabe der Erfindung, ein einfaches und zuverlässiges Verfahren zur Erkennung der Ausrichtung/Lage von Produkten vorzuschlagen.

Diese Aufgabe wird zum einen durch eine Vorrichtung mit den Merkmalen des Anspruchs 1 gelöst. Dadurch ist zunächst ein einfacher Aufbau der Vorrichtung gewährleistet. Des weiteren stellt die Anordnung mehrerer Sender und zweier Empfänger sicher, dass mehrere Messwerte ermittelt und mittels Differenzbildung auswertbar sind, so dass im Ergebnis eine eindeutige und zuverlässige Zuordnung der Ausrichtung/Lage der Produkte vorliegt.

Der Träger ist bogenförmig ausgebildet und einen Halbkreis beschreibend über das Transportelement gespannt. Dadurch wird sichergestellt, dass jedes Produkt zwangsläufig von dem Messmittel unabhängig von seiner Lage und Ausrichtung erfassbar ist. Auch kann die Messung wegen der gleichmäßigen Lichtverteilung unabhängig von der Form eines Produktes erfolgen, da z.B. unterschiedliche Krümmungen des Produktes ausgeglichen werden. Ein weiterer Vorteil der genannten Anordnung bzw. Ausbildung besteht in der kompakten und einfachen Konstruktion der Vorrichtung.

In einer bevorzugten Weiterbildung der Erfindung sind die Sender als Leuchtdioden und die Empfänger als Lichtmengenmesser ausgebildet. Durch die Ausbildung des Messmittels als Lichtbogen ist eine gleichmäßige Ausleuchtung des Produktes realisiert, was zu einer zuverlässigen Erkennung führt. Des weiteren ist damit eine sehr hohe Transportgeschwindigkeit der Produkte auf dem Transportelement gewährleistet. Trotz der hohen Geschwindigkeit erlaubt die beanspruchte Ausbildung der Sender und Empfänger eine zuverlässige Aufnahme der Messwerte.

Vorteilhafterweise sind die Sender und Empfänger auf den Kreismittelpunkt gerichtet. Dadurch kann die Ausrichtung/Lage der Produkte unabhängig von ihrer Größe ermittelt werden. Anders ausgedrückt können nahezu alle Fischarten und -größen hinsichtlich ihrer Ausrichtung/Lage bestimmt werden.

Des weiteren wird die Aufgabe durch ein Verfahren mit den Merkmalen des Anspruchs 9 gelöst. Mit diesem Verfahren ist es auf besonders einfache und zuverlässige Weise möglich eine Bestimmung der Ausrichtung/Lage der Produkte sichergestellt.

Vorzugsweise werden die unterschiedlichen Reflektionseigenschaften von Bauchseite und Rückenseite eines Produktes/Fisches einerseits und vom Kopfbereich und Schwanzbereich andererseits zur Erkennung der Ausrichtung/Lage des Produktes/Fisches auf dem Transportelement ausgewertet. Anders ausgedrückt werden die jedem Produkt/Fisch naturgemäß innewohnenden Merkmale zur Auswertung herangezogen. Bei den Produkten/Fischen ist der Rücken üblicherweise dunkler als der Bauch. Der Kopfbereich zeigt eine höhere Reflektion als der Schwanzbereich. Aus diesen ermittelten Informationen lässt sich zuverlässig eine Aussage über die Ausrichtung/Lage der Fische gewinnen.

Weitere vorteilhafte und bevorzugte Merkmale und Ausführungsformen sowie Verfahrensschritte ergeben sich aus den Unteransprüchen und der Beschreibung. Eine besonders bevorzugte Ausführungsform sowie das Verfahrensprinzip werden anhand der beigefügten Zeichnung näher erläutert. In der Zeichnung zeigt:
- Fig. 1: eine Vorderansicht (Sicht in Transportrichtung) einer erfindungsgemäßen Vorrichtung, und
- Fig. 2: eine Seitenansicht der Vorrichtung gemäß Figur 1.

Die gezeigte Vorrichtung sowie das im folgenden beschriebene Verfahren dienen zur Erkennung der Ausrichtung/Lage, also Kopf voraus oder Schwanz voraus sowie der Bauch-/Rückenlage, von in ihrer Längsrichtung transportierten Fischen. Allerdings ist die Erfindung nicht auf dieses Einsatzgebiet beschränkt. Die Vorrichtung und das Verfahren sind auch zur Erkennung der Ausrichtung/Lage anderer Produkte, die unterschiedliche Reflektionseigenschaften besitzen, anwendbar.

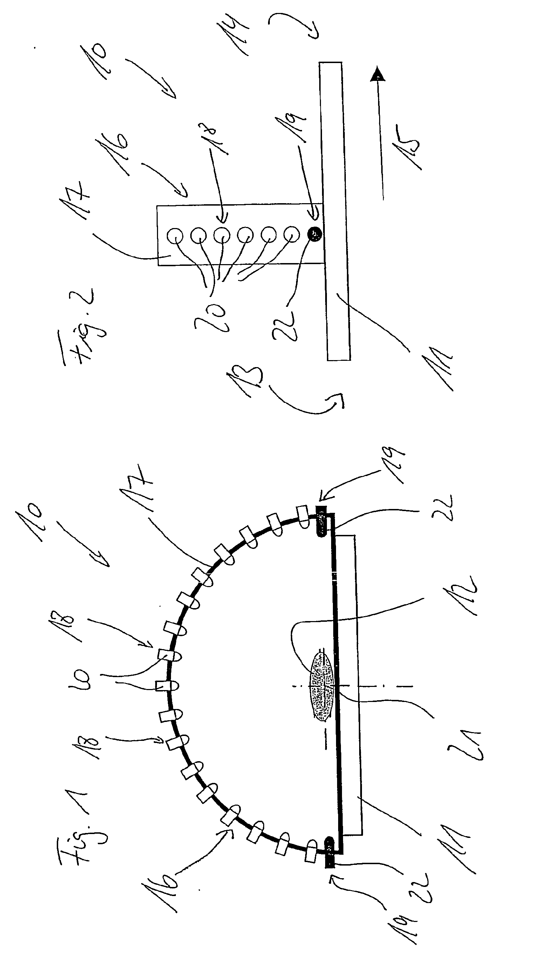

Die in den Figuren 1 und 2 dargestellte Vorrichtung 10 umfasst ein Transportelement 11, das als Transportband, Förderband oder in anderer üblicher Weise ausgebildet sein kann. Mittels des Transportelementes 11 sind Produkte, beispielsweise die Fische 12, von einem Eingabebereich 13 zu einem Ausgabebereich 14 transportierbar. Im Eingabebereich 13 kann z.B. eine erste (nicht dargestellte) Vorrichtung zur Be/Verarbeitung der Fische oder auch nur ein Reservoir an Fischen 12 angeordnet sein. Die Fische 12 können auch direkt automatisch oder manuell z.B. durch eine Bedienperson auf das Transportelement 11 bringbar sein. Im Ausgabereich 14 können weitere (nicht dargestellte) Vorrichtungen zur Weiterverarbeitung der Fische 12 angeordnet sein. Die Fische 12 sind in Förderrichtung (in Richtung des Pfeils 15) wahlweise kontinuierlich oder getaktet vom Eingabebereich 13 in den Ausgabebereich 14 transportierbar.

Des weiteren umfasst die Vorrichtung 10 ein Messmittel 16, das dem Transportelement 11 zugeordnet ist. Das Messmittel 16 ist eine Art Lichtbogen, der einen Träger 17 mit daran angeordneten Sendern 18 und Empfängern 19 umfasst. Der Träger 17 ist bogenförmig ausgebildet und beschreibt einen Halbkreis. Der Träger 17 ist im Bereich des Transportelementes 11 befestigt und überspannt letzteres, derart, dass sämtliche auf dem Transportelement 11 transportieren Fische 12 unterhalb des Trägers 17 hindurch gefördert werden. Alternativ können jedoch auch andere Formen des Trägers 17 verwendet werden. Dieser kann ein- oder auch mehrteilig ausgebildet sein. Wichtig ist, dass von beiden Seiten des Transportelementes 11 Sender 18 und Empfänger 19 auf das Transportelement 11 zur gleichmäßigen Beaufschlagung mit Signalen und Empfang derselben richtbar sind.

Die Sender 18 sind als Leuchtdioden 20 ausgebildet. Jede andere Art licht- bzw. strahlungsabgebender Sender 18 können jedoch ebenfalls eingesetzt werden. Mindestens zwei, vorzugsweise jedoch mehrere Leuchtdioden 20 sind gleichmäßig über den (Teil-) Umfang des Trägers 17 verteilt. Sämtliche Leuchtdioden 20, die beispielsweise in einem Radius von 250mm (andere Radien sind selbstverständlich möglich) über dem Transportelement 11 angeordnet sind, weisen eine solche Ausrichtung auf, so dass die Lichtstrahlen auf den Kreismittelpunkt 21 gerichtet sind. Gleiches gilt für die Empfänger 19, die als Lichtmengenmesser 22 ausgebildet sind. Die Lichtmengenmesser 22 (ausreichend sind zwei Lichtmengenmesser 22, es können jedoch zu beiden Seiten der Produkte bzw. des Transportelementes 11 auch mehrere sein) sind an einander gegenüberliegenden Seiten des Transportelementes 11 (in Transportrichtung gemäß Pfeil 15 rechts und links vom Transportelement 11) angeordnet. Sie sind im Bereich der freien Enden des Trägers 17 positioniert, und zwar derart, dass sie dicht oberhalb der durch das Transportelement 11 aufgespannten Transportebene angeordnet und im wesentlichen parallel zur Transportebene gerichtet sind.

Mindestens die Empfänger 19, also die Lichtmengenmesser 22 sind an eine nicht dargestellte Auswerteeinheit angeschlossen. Diese kann z.B. PC-unterstützt sein. Optional können auch die Sender 18, also die Leuchtdioden 20 an die Auswerteeinheit und/oder eine separate Steuerung angeschlossen sein. Entsprechend des Auswerteergebnisses kann der Vorrichtung 10 z.B. eine Vorrichtung zum Wenden und/oder Drehen der Produkte nachgeordnet sein, um die Produkte/Fische 12 in die gewünschte Ausrichtung/Lage zu bringen.

Im folgenden wird das Verfahrensprinzip anhand der Figuren näher erläutert:

Die Fische 12 werden manuell oder automatisch auf das Transportelement 11 gelegt, und zwar mit ihrer Längserstreckung in Transportrichtung gemäß Pfeil 15. Die Fische 12 werden üblicherweise kontinuierlich vom Eingabebereich 13 zum Ausgabebereich 14 in Seitenlage transportiert, wobei sie das Messmittel 16 passieren. Genauer werden die Fische 12 unter dem Träger 17 hindurch gefördert. Durch die Leuchtdioden 20 am Träger 17 werden die Fische 12 gleichmäßig mit Lichtsignalen bzw. Lichtstrahlen beaufschlagt. Durchläuft ein Fisch 12 den Lichtbogen, absorbiert der im Vergleich zum

Bauch dunklere Rücken mindestens einen wesentlichen Anteil der Lichtstrahlen, so dass der Lichtmengenmesser 22, der dem Rücken zugekehrt ist, eine geringe Lichtmenge erfasst. Der hellere, häufig silbrige Bauch des Fisches 12 reflektiert das Licht der Leuchtdioden 20, so dass der dem Bauch zugekehrte Lichtmengenmesser 22 eine größere Lichtmenge erfasst. Mittels der Auswerteeinheit kann z.B. durch Differenzbildung die Bauch-/Rückenlage ermittelt werden. Zur Erhöhung der Sicherheit können auch an mehreren Punkten die reflektierten Lichtstrahlen aufgenommen werden.

Dadurch, dass der Fisch bei Transport unter dem Lichtbogen hindurch quasi abgescannt werden kann, lässt sich auch die Kopf-/Schwanzposition ermitteln. Es hat sich gezeigt, dass der Kopfbereich eine höhere Lichtreflektion als der Schwanzbereich aufweist. Durch einen Abgleich der zuerst beim Eintritt des Fisches 12 unter den Lichtbogen aufgenommenen Daten sowie der zuletzt bei Austritt aus dem Lichtbogen aufgenommenen Daten lässt sich die Ausrichtung bezüglich Kopf bzw. Schwanz, also Kopf voraus oder Schwanz voraus, genau ermitteln.

Das beschriebene Messverfahren ist unabhängig von der Form der Fische 12, da unterschiedliche Formen, insbesondere Krümmungen des Fisches 12 durch das gleichmäßige Licht des Lichtbogens ausgeglichen werden. Auch ist das Messverfahren wegen der Ausrichtung der Leuchtdioden 20 und der Lichtmengenmesser 22 auf den Kreismittelpunkt 21 bzw. genauer auf die Fischmitte größenunabhängig.

## Patentansprüche

1. Vorrichtung zur Erkennung der Ausrichtung/Lage von Produkten, insbesondere von Fischen, auf einem Transportelement, umfassend ein Transportelement (11) zum Transportieren der Produkte von einem Eingabebereich (13) zu einem Ausgabebereich (14) sowie ein im Bereich des Transportelementes (11) angeordnetes Messmittel (16), **dadurch gekennzeichnet, dass** das Messmittel (16) einen Träger (17) umfasst, an dem mindestens zwei Sender (18) und mindestens zwei Empfänger (19) angeordnet sind, wobei der Träger (17) bogenförmig ausgebildet und einen Halbkreis beschreibend über das Transportelement (11) gespannt ist.

2. Vorrichtung nach Anspruch 1, **dadurch gekennzeichnet, dass** die Sender (18) als Leuchtdioden (20) ausgebildet und die Empfänger (19) als Lichtmengenmesser (22) ausgebildet sind.

3. Vorrichtung nach Anspruch 2, **dadurch gekennzeichnet, dass** die Leuchtdioden (20) gleichmäßig über den Umfang des Trägers (17) verteilt sind.

4. Vorrichtung nach Anspruch 2 oder 3 **dadurch gekennzeichnet, dass** die Leuchtdioden (20) auf den Kreismittelpunkt (21) des Trägers (17) gerichtet sind.

5. Vorrichtung nach einem der Ansprüche 2 bis 4, **dadurch gekennzeichnet, dass** die beiden Lichtmcngenmesser (22) an den Enden des Trägers (17) angeordnet sind.

6. Vorrichtung nach Anspruch 5, **dadurch gekennzeichnet, dass** die Lichtmengenmesser (22) auf einander gegenüberliegenden Seiten des Transportelementes (11) dicht oberhalb der durch das Transportelement (11) aufgespannten Transportebene angeordnet sind.

7. Vorrichtung nach einem der Ansprüche 2 bis 6, **dadurch gekennzeichnet, dass** die Lichtmengenmesser (22) im wesentlichen auf den Kreismittelpunkt (21) des Trägers (17) gerichtet sind.

8. Vorrichtung nach einem der Ansprüche 1 bis 7, **dadurch gekennzeichnet, dass** mindestens die Empfänger (19) an eine Auswerteeinheit angeschlossen sind.

9. Verfahren zur Erkennung der Ausrichtung/Lage von Produkten, insbesondere von Fischen, auf einem Transportelement mit einer Vorrichtung nach einem der Ansprüche 1-8, umfassend die Schritte:
- Transportieren der Produkte auf einem Transportelement (11) von einem Eingabebereich (13) zu einem Ausgabebereich (14),
- Ermitteln der Ausrichtung/Lage der Produkte durch ein Messmittel (16) während des Transports der Produkte auf dem Transportelement (11),
**dadurch gekennzeichnet, dass** die Produkte zur Ermittlung der Ausrichtung/Lage mit Sendersignalen beaufschlagt und die entsprechenden Reflektionen am Produkt an mindestens zwei Punkten empfangen werden, wobei die Produkte halbkreisförmig mittels Leuchtdioden (20) angestrahlt werden.

10. Verfahren nach Anspruch 9, **dadurch gekennzeichnet, dass** die Produkte in Seitenlage in ihrer Längserstreckung in Transportrichtung (Pfeil 15) unter dem Messmittel (16) hindurch transportiert werden, wobei die Produkte gleichmäßig mit Licht bestrahlt werden.

11. Verfahren nach Anspruch 9 oder 10, **dadurch gekennzeichnet, dass** sämtliche Lichtstrahlen auf den Kreismittelpunkt (21) eines Trägers (17) des Messmittel (16) gerichtet sind.

12. Verfahren nach Anspruch 10 oder 11, **dadurch gekennzeichnet, dass** die von den Produkten abgestrahlten Reflektionen der gesendeten Signale an einander entgegen gesetzten Punkten des Transportelementes (11) mittels Lichtmengenmessern (22) empfangen werden, wobei die Differenz der empfangenen Signale zur Bestimmung der Ausrichtung/Lage ausgewertet wird.

13. Verfahren nach einem der Ansprüche 9 bis 12, **dadurch gekennzeichnet, dass** die unterschiedlichen Reflektionseigenschaften von Bauchseite und Rückenseite eines Fisches (12) einerseits und vom Kopfbereich und Schwanzbereich andererseits zur Erkennung der Ausrichtung/Lage des Fisches auf dem Transportelement (11) ausgewertet werden.

## Claims

1. Apparatus for detecting the orientation/position of products, in particular fish, on a transport element, including a transport element (11) for transporting the products from an input area (13) to an output area (14) as well as a measuring means (16) arranged in the region of the transport element (11), **characterised in that** the measuring means (16) includes a support (17) on which are arranged at least two transmitters (18) and at least two receivers (19), wherein the support (17) is of arcuate design and spans the transport element (11), describing a semicircle.

2. Apparatus according to claim 1, **characterised in that** the transmitters (18) are designed as light-emitting diodes (20) and the receivers (19) as photometers (22).

3. Apparatus according to claim 2, **characterised in that** the light-emitting diodes (20) are evenly distributed over the circumference of the support (17).

4. Apparatus according to claim 2 or 3, **characterised in that** the light-emitting diodes (20) are directed onto the centre (21) of the circle of the support (17).

5. Apparatus according to any one of claims 2 to 4, **characterised in that** the two photometers (22) are arranged at the ends of the support (17).

6. Apparatus according to claim 5, **characterised in that** the photometers (22) are arranged on mutually opposed sides of the transport element (11) just above the plane of transport spanned by the transport element (11).

7. Apparatus according to any one of claims 2 to 6, **characterised in that** the photometers (22) are essentially directed onto the centre (21) of the circle of the support (17).

8. Apparatus according to any one of claims 1 to 7, **characterised in that** at least the receivers (19) are connected to an evaluating unit.

9. Method for detecting the orientation/position of products, in particular fish, on a transport element with an apparatus according to any one of claims 1 to 8, including the steps of:
- transporting the products on a transport element (11) from an input area (13) to an output area (14),
- determining the orientation/position of the products by a measuring means (16) during transport of the products on the transport element (11),
**characterised in that,** for determining the orientation/position, the products are subjected to transmitter signals and the corresponding reflections are received at at least two points, wherein the products are irradiated in a semicircle by means of light-emitting diodes (20).

10. Method according to claim 9, **characterised in that** the products are transported through on their sides in their longitudinal extent in the direction of transport (arrow 15) under the measuring means (16), the products being uniformly irradiated with light.

11. Method according to claim 9 or 10, **characterised in that** all the light rays are directed onto the centre (21) of the circle of a support (17) for the measuring means (16).

12. Method according to claim 10 or 11, **characterised in that** the reflections of the transmitted signals emitted by the products are received at mutually opposed points of the transport element (11) by means of photometers (22), the difference in the received signals being evaluated to determine the orientation/position.

13. Method according to any of claims 9 to 12, **characterised in that** the different reflection properties of ventral side and dorsal side of a fish (12) on the one hand and of head region and tail region on the other hand are evaluated for detection of the orientation/position of the fish on the transport element (11).

## Revendications

1. Dispositif destiné à détecter l'orientation/la position de produits, en particulier de poissons, sur un élément de transport, comportant un élément de transport (11) destiné à transporter les produits d'une zone d'entrée (13) à une zone de sortie (14) ainsi que des moyens de mesure (16) disposés dans la zone de l'élément de transport (11), **caractérisé en ce que** les moyens de mesure (16) comportent un support sur lequel au moins deux émetteurs (18) et au moins deux récepteurs (19) sont disposés, le support (17) étant conçu en forme d'arc et étant tendu au-dessus de l'élément de transport (11) de manière à décrire un arc de cercle.

2. Dispositif selon la revendication 1, **caractérisé en ce que** les émetteurs (18) sont conçus comme des diodes électroluminescentes (20) et les récepteurs (19) comme des dispositifs de mesure de quantité de lumière (22).

3. Dispositif selon la revendication 2, **caractérisé en ce que** les diodes électroluminescentes (20) sont réparties uniformément sur la circonférence du support (17).

4. Dispositif selon la revendication 2 ou 3, **caractérisé en ce que** les diodes électroluminescentes (20) sont orientées sur le centre du cercle (21) du support (17).

5. Dispositif selon l'une quelconque des revendications 2 à 4, **caractérisé en ce que** les deux dispositifs de mesure de quantité de lumière (22) sont disposés sur les extrémités du support (17).

6. Dispositif selon la revendication 5, **caractérisé en ce que** les dispositifs de mesure de quantité de lumière (22) sont disposés de manière dense sur les faces mutuellement opposées de l'élément de transport (11) au-dessus du plan de transport couvert par l'élément de transport (11).

7. Dispositif selon l'une quelconque des revendications 2 à 6, **caractérisé en ce que** les dispositifs de mesure de quantité de lumière (22) sont orientés sensiblement sur le centre du cercle (21) du support (17).

8. Dispositif selon l'une quelconque des revendications 1 à 7, **caractérisé en ce qu'**au moins les récepteurs (19) sont raccordés à une unité d'analyse.

9. Procédé destiné à détecter l'orientation/la position de produits, en particulier de poissons, sur un élément de transport comprenant un dispositif selon l'une quelconque des revendications 1 à 8, comportant les étapes consistant à :
- transporter les produits sur un élément de transport (11) d'une zone d'entrée (13) à une zone de sortie (14),
- déterminer l'orientation/la position des produits grâce aux moyens de mesure (16) pendant le transport des produits sur l'élément de transport (11),
**caractérisé en ce que** des signaux d'émetteur sont injectés sur les produits dont l'orientation/la position reste à déterminer et les réflexions sur le produit correspondantes sont reçues au moins en deux points, les produits étant irradiés en forme de demi-cercle au moyen de diodes électroluminescentes (20).

10. Procédé selon la revendication 9, **caractérisé en ce que** les produits sont transportés en position latérale dans leur extension longitudinale dans le sens de transport (flèche 15) sous les moyens de mesure (16), les produits étant régulièrement irradiés de lumière.

11. Procédé selon la revendication 9 ou 10, **caractérisé en ce que** tous les faisceaux lumineux sont orientés sur le centre du cercle (21) d'un support (17) des moyens lumineux (16).

12. Procédé selon la revendication 10 ou 11, **caractérisé en ce que** les réflexions des signaux émis renvoyées par les produits en des points mutuellement opposés de l'élément de transport (11) sont reçus au moyen de dispositifs de mesure de quantité de lumière (22), la différence entre les signaux reçus étant analysée pour déterminer l'orientation/la position.

13. Procédé selon l'une quelconque des revendications 9 à 12, **caractérisé en ce que** les différentes propriétés de réflexion du côté ventre et du côté dos d'un poisson (12) d'une part et de la zone de tête et de la zone de queue d'autre part sont analysées pour détecter l'orientation/la position du poisson sur l'élément de transport (11).
